(19) **Europäisches Patentamt**
**European Patent Office**
**Office européen des brevets**

(11) **EP 4 642 166 A1**

(12) # EUROPEAN PATENT APPLICATION

(43) Date of publication:
**29.10.2025 Bulletin 2025/44**

(21) Application number: **24171485.6**

(22) Date of filing: **22.04.2024**

(51) International Patent Classification (IPC):
*H05B 45/35* (2020.01) *H02J 3/14* (2006.01)

(52) Cooperative Patent Classification (CPC):
**H05B 45/35; H02J 3/144**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Tridonic GmbH & Co KG**
**6851 Dornbirn (AT)**

(72) Inventors:
• **Stark, Stefan**
**6851 Dornbirn (AT)**

• **Saccavini, Lukas**
**6851 Dornbirn (AT)**
• **Romano, Fabio**
**6851 Dornbirn (AT)**
• **Kucera, Clemens**
**6851 Dornbirn (AT)**

(74) Representative: **Beder, Jens**
**Mitscherlich PartmbB**
**Patent- und Rechtsanwälte**
**Karlstraße 7**
**80333 München (DE)**

(54) **INTELLIGENT MAINS HALF WAVE SELECTION FOR LINE CYCLE SKIPPING MODE**

(57)     An infrastructure system, e.g., a lighting system, comprises a plurality of driver devices each configured to be supplied via a power factor correction circuit from a mains grid and to generate and output a load current. The driver devices are configured to operate in a line cycle skipping mode, wherein in the line cycle skipping mode, the power factor correction circuit is configured to reduce or inhibit power consumption for at least a first part of at least one line cycle of the mains grid. A control device is configured to generate and transmit control signals to the driver devices via a control network, and to receive device information from the driver devices via the control network. The control device receives, in the device information, information on a power consumption and information on an intention to switch into the line cycle skipping mode of at least one of the driver devices. The control device determines a start time of the line cycle skipping for the at least one driver device based on the received device information of the at least one driver device and to generate the control signal to the at least one driver device including information on the determined at least one start time of the line cycle skipping. The at least one driver device is configured to start line cycle skipping based on the information on the determined at least one start time of the line cycle skipping included in the control signal.

FIG. 5

**Description**

The disclosure is in the field of infrastructure systems comprising plural electric devices supplied via an AC power grid and implementing power factor correction at the mains interface of the electric devices to the AC power grid. In particular, the disclosure concerns a method for operating the infrastructure system and the infrastructure system, e.g., a lighting system.

In current infrastructure, e.g. building infrastructure, a mains grid, which provides AC power, supplies a plurality of infrastructure systems that include driver devices, e.g. operate as power converters and generate DC power. The plurality of driver devices generate and supply the DC power to a plurality of load devices that consume the DC power. The electric power that a driver device draws from the mains grid varies depending on the DC power provided via the generated DC load current to the load device(s) supplied by the driver device.

A specific example for an infrastructure system is a lighting system, which includes AC/DC driver devices operating from an AC mains grid and supplies lighting modules that comprises LEDs with a DC load current. The light output by the lighting modules may be dimmed depending on operational settings, and the AC power drawn by the AC/DC driver devices varies accordingly.

Recent approaches in operating the driver devices from the AC mains grid propose to operate the driver device in a line cycle skipping mode (LCS mode) in case the driver device operates with only reduced power demand by the load supplied by the driver device. When operating in the line cycle skipping mode, the driver device reduces or even inhibits a power input from the mains grid for at least a part, e.g. one or plural half cycles or half waves, of at least one line cycle of the mains grid.

The line cycle skipping mode (line cycle skipping operational mode) is an operational mode of a stage of the driver device, in particular a power factor correction (PFC) circuit of the driver device, in which during at least one cycle of the mains grid no energy is drawn from the mains grid. While operating in the line cycle skipping mode, subsequent stages (including a second stage) of the driver device are supplied with DC energy from capacitors supporting a DC link connecting the first stage and the second stage only. Operating in the line cycle skipping mode essentially results in disregarding one or plural line cycles of the AC mains grid for supplying the driver device. During at least one other line cycle of the of the AC mains grid, the driver device acquires an increased amount of energy to compensate for the at least reduced amount of energy during the skipped line cycle(s).

The driver device may determine the exact time when to start skipping the at least one line cycle of the line cycles of the AC mains grid randomly. In case of infrastructure systems with a large number of driver devices all supplied via the mains grid, the random distribution of the skipped at least one cycle of the mains grid during which the driver devices consumes (draws) no energy from the mains grid may ensure a sufficiently stable load demand on the mains grid over the plurality of driver devices.

Nevertheless, there exist scenarios in which a plurality of driver devices almost simultaneously switch into the LCS mode and their aggregated patterns of line cycles in which the driver devices consume power from the mains grid and the skipped line cycles in which the driver devices consume no power from the mains grid respectively coincide. In such scenario, undesired fluctuations of a mains current amplitude of the mains grid are the result.

It is an object of the invention to improve infrastructure systems that include a plurality of driver devices supplied with power drawn from the mains grid and to avoid the aforementioned disadvantages. In particular, it is an object to improve infrastructure systems to present a combined load to the mains grid that avoids fluctuations in power demand.

The infrastructure system according to independent claim 1 and the method for controlling the infrastructure system according to the corresponding independent claim provide advantageous solutions to the aforementioned problem.

The dependent claims define further advantageous embodiments.

The infrastructure system, in particular a lighting system, according to a first aspect comprises a plurality of driver devices and a control device. Each driver device is configured to be supplied via a power factor correction circuit of the driver device from a mains grid and to generate and output a load current to a load. The driver devices are configured to operate in a line cycle skipping mode, wherein in the line cycle skipping mode, the power factor correction circuit is configured to reduce or inhibit power consumption from the mains grid for at least a (first) part of at least one line cycle of the mains grid. The control device is configured to generate and transmit control signals to the driver devices via a control network, and receive device information from the driver devices via the control network. The control device is configured to receive, in the device information, information on a power consumption and information on an intention to switch into the line cycle skipping mode of at least one of the driver device. The driver device is further configured to determine a start time of the line cycle skipping for the at least one driver device based on the received device information of the at least one driver device and to generate the control signal to the at least one driver device including information on the determined at least one start time of the line cycle skipping. The at least one driver device is configured to start line cycle skipping based on the information on the determined at least one start time of the line cycle skipping included in the transmitted control signal.

The infrastructure system uses an existing control network that enables communication between the driver devices in the field and a central device, the control device, for synchronizing the start time of the line cycle skipping. In particular, the infrastructure system determines the start time of the half cycle(s) of the line cycles of the mains grid in which the individual driver devices do not consume power from the mains grid ("skipped line cycles"), for the driver devices participating in the line cycle skipping. The control device obtains the driver information from the driver devices, which includes information on a power consumption of the individual driver device and information on the intention to switch into the line cycle skipping mode, e.g., due to a decreased power demand on the driver device. Hence, the control device has the required information for planning a suitable start time for the individual driver device when to commence line cycle skipping. In particular, the control device determines the start time of the half cycle(s) of the line cycles of the mains grid when the individual driver devices do not draw energy from the mains grid, taking the overall power demand into account for planning the time.

The control device may be implemented in a central device of the infrastructure system, e.g. in a structural element of the infrastructure system that has a communication link with those driver devices of the infrastructure system, which are capable to operate in the line cycle mode. The control device may be implemented in a central device that has the capability of monitoring the mains current of the mains grid.

The control device provides the information when to start line cycle skipping to the individual driver devices, hence controlling the start time of the half cycles of the line cycles of the mains grid in which the individual driver devices do not draw energy from the mains grid. Thereby, the control device avoids an unsynchronized and possibly parallel running of time periods during which different driver devices draw energy from the mains grid and of time periods during which different driver devices do not draw energy different driver devices do not draw energy from the mains grid. Hence, the resulting power demand on the mains grid in the infrastructures system can be levelled.

The proposed infrastructure system is also advantageous, as the decision whether to switch into the line cycle skipping operational mode still rests with the driver devices. Only the time when to actually omit at least a part of a line cycle period of the mains grid is synchronized by the central control device based on the information received from the driver devices in the field.

The proposed scheme uses information on an energy consumption of the individual driver devices, which is already available in many current driver devices such as light driver devices, and which requires only limited communication bandwidth for transmission to the central control device. Hence, the additional hardware modifications for implementing the presented approach in the driver device is small and may only concern modifications in control software or firmware of control circuitry of the driver device. Current wireless or wired communication networks and control networks already existing in many current infrastructure systems may provide the limited communication bandwidth required for an implementation.

In the infrastructure system according to an embodiment, each of the driver devices is configured to determine or measure its power consumption from the mains grid, and to generate the device information including the information on power consumption based on the determined power consumption.

The individual driver devices provide information on their current power consumption to the control device. Thereby the control device is enabled to determine the respective start times for the half cycles of the line cycles of the mains grid in which the individual driver devices do not draw energy from the mains grid so that an average power demand on the entire mains grid becomes stable and shows only minimal fluctuations with time.

The control device may determine the start time based on the driver information including which driver device draws how much power from the mains grid. A suitable grouping of driver devices is possible, wherein each group includes driver devices with the same start time for the half cycles of the line cycles of the mains grid in which the individual driver devices of the group do not draw energy from the mains grid. The suitable grouping ensures that a simultaneous overall power consumption of all driver devices of the infrastructure system is levelled or even constant, the power consumption has minimized fluctuations, or the variations in power demand on the mains grid are smaller than a predetermined threshold value.

According to an embodiment of the infrastructure system, at least one first driver device and at least one second driver device of the driver devices transmit the device information including the information on a power consumption and information on an intention to switch into the line cycle skipping mode to the control device. The control device is configured to determine a first start time of the line cycle skipping of the at least one first driver device and a second start time of the line cycle skipping of the at least one second driver device. The determined first start time and second start time differ.

Hence, by respectively different start times for the line cycles of the first and second driver devices, the variations in the aggregated energy demand of the first and second driver devices of the mains grid are advantageously levelled. Peaks in the aggregated power demand can be avoided, which could otherwise result from the first and second driver devices simultaneously drawing power from the mains grid. The same applies to drops in power demand, which could occur due to the first and second driver devices simultaneously starting half cycles of the line cycles of the mains grid in which the individual driver devices of the group do not draw energy from the mains grid.

In the infrastructure system according to an embodiment, the control device is configured to determine a difference between a first start time of the line cycle skipping of the at least one first driver device and a second start time of the line cycle skipping of the at least one second driver device by minimizing a peak power consumption of the summed power consumption of the at least one first driver device and the at least one second driver device.

Hence, the control device is able to determine the start times for the at least one half cycle of the line cycles of the mains grid in which the individual driver devices do not draw energy such that peaks and drops in the summed power demand (aggregated power demand) to the mains grid are avoided.

According to an embodiment of the infrastructure system, the control device is configured to determine a first group including at least one first driver device and at least one second group including at least one second driver device, wherein a difference between a summed power consumption of the first driver device(s) in the first group and a summed power consumption of the driver device(s) of the at least one second group is smaller than a first threshold.

By grouping the driver devices two or more groups of driver devices based on the power consumption of the individual driver devices, the control device may plan the common start time for each group for starting half cycles of the line cycles of the mains grid in which the individual driver devices of each group do not consume power such that the overall time behavior of the power consumption on the mains grid by the infrastructure system is levelled.

In the infrastructure system according to an embodiment, the control signal includes the information on the determined start time of the line cycle skipping for the at least one driver device as an integer number of line cycle periods of the mains grid.

Hence the data size of the information on the determined start time of the line cycle skipping for the at least one driver device that is transmitted via the control network is advantageously small, and may be transmitted via a communication network of only limited transmission bandwidth.

According to an embodiment of the infrastructure system, the control signal includes the information on the determined start time of the line cycle skipping for the at least one driver device as a time delay information for delaying the determined start time of the line cycle skipping for the at least one driver device.

Hence, the driver devices of the infrastructure system may implement the synchronized line cycle skipping that avoids sudden increases and drops in the summed power demand on the mains grid due to line cycle skipping without the individual driver devices necessarily sharing a common time base. This applies in particular for negligible or known time delays for processing and communicating the driver information and the control information.

In the infrastructure system according to an embodiment, the control device is configured to determine whether a first intended start time of the line cycle skipping for the at least one first driver device and a second intended start time of the line cycle skipping for the at least one second driver device are the same based on the received driver information from the at least one first driver device and the at least one second driver device. In case the first and the second start time are the same, the control device is configured to generate and transmit the control signals including information for shifting the start time for one of the at least one first driver device and the at least one second driver device.

Hence, the control device monitors (supervises) the line cycle skipping scheme intended for implementation by the driver devices based on the received driver information. The control device only intervenes when an intervention appears advantageous in terms of levelling the overall power demand on the mains grid and to avoid peaks or drops in power demand. The required processing and communication resources for an implementation are therefore advantageously low.

According to an embodiment of the infrastructure system, each of the driver devices is configured to perform line cycle skipping based on a corresponding time scheme, or alternatively perform line cycle skipping based on line cycle skipping information received from the control device. The time scheme (line cycle skipping pattern, line cycle skipping schedule) may include a number and sequence of half cycles of the line cycles of the mains grid during which to reduce or inhibit power consumption from the mains grid, and a number and sequence of half cycles of the line cycles of the mains grid during which to increase power consumption from the mans grid for compensating for the skipped half cycles of the line cycles of the mains grid.

Using a corresponding time scheme known, in particular stored in the driver device, e.g. shifted only in time for different driver devices of different groups based on the received control information enables to minimize the information to be transmitted over the control network.

In the infrastructure system according to an embodiment, each of the driver devices is configured to perform line cycle skipping based on line cycle skipping information comprising a time scheme included in the control signal.

Hence, the control device has the capability to plan the lines cycle skipping in more detail for the individual driver devices, thereby having more adjustable parameters available for levelling the load demand on the mains grid. The time scheme may also include parameters including a number and sequence of half cycles of the line cycles of the mains grid during which to reduce or entirely suppress power consumption from the mains grid, and/or respectively when, how long, and how much to increase power consumption from the mains grid for compensation for the individual driver device.

According to an embodiment of the infrastructure system, the time scheme includes a delay information including a predetermined integer number of line cycles of the mains grid, which the at least one driver device delays switching into the line cycle skipping mode in response to receiving the control signal including information on the determined at least one start time of the line cycle skipping.

Transmitting a delay information that includes an integer number of line cycles requires only a limited data transmission capability on the control network of the infrastructure system.

In the infrastructure system according to an embodiment, the control network is a wired network or a wireless network, in particular a lighting control network, in particular a lighting control network based on the DALI standard.

The claimed approach requires only limited data bandwidth for transmitting the driver information and the control information and may be implemented using existing wired or wireless networks known in building infrastructures systems. In particular, existing lighting systems, e.g., connected based on a DALI series lighting control standard may advantageously use the line cycle skipping mode with the proposed central control scheme for levelling the load demand on the mains grid.

The second aspect concerns a method for controlling an infrastructure system, in particular a lighting system, wherein the infrastructure system comprises a plurality of driver devices each configured to be supplied via a power factor correction circuit from a mains grid, and to generate and output a load current. The driver devices are configured to operate in a line cycle skipping mode, wherein in the line cycle skipping mode, the power factor correction circuit is configured to reduce or inhibit power consumption from the mains grid for at least a first part of at least one line cycle of the mains grid. The lighting system further comprises a control device configured to generate and transmit control signals to the driver devices via a control network, and receive device information from the driver devices via the control network. The method comprises a step of receiving, by the control device, in the device information, information on a power consumption and information on an intention to switch into the line cycle skipping mode of at least one of the driver device; the method proceeds with a step of determining, by the control device, a start time of the line cycle skipping for the at least one driver device based on the received device information of the at least one driver device, a step of generating by control device, the control signal to the at least one driver device including information on the determined at least one start time of the line cycle skipping, and outputting the generated control signal to the at least one driver device. The method further comprises starting, by the at least one driver device, line cycle skipping based on the information on the determined at least one start time of the line cycle skipping included in the transmitted control signal.

The method for controlling an infrastructure system according to the second aspect achieves corresponding advantageous effects as discussed with reference to the infrastructure system of the first aspect.

The following description of embodiments refers to the figures, in which

Fig. 1 shows a flowchart illustrating an application example of the method for controlling an infrastructure system according to an embodiment;

Fig. 2 provides an overview of the architecture of an infrastructure system suitable for implementing the method for controlling an infrastructure system;

Fig. 3 presents an overview over the architecture of a light driver device as a particular example of the driver device, which is usable in the infrastructure system according to an embodiment;

Fig. 4 illustrates an example for controlling switching into a lien cycle switching mode by the driver device according to an embodiment; and

Fig. 5 shows an exemplary time behavior of mains grid currents in an application example of an embodiment illustrating advantages in an application of the infrastructure system.

In the figures, corresponding elements have the same reference signs. The discussion of the figures avoids discussion of same reference signs in different figures wherever considered possible without adversely affecting comprehensibility and avoiding unnecessary repetitions for sake of conciseness.

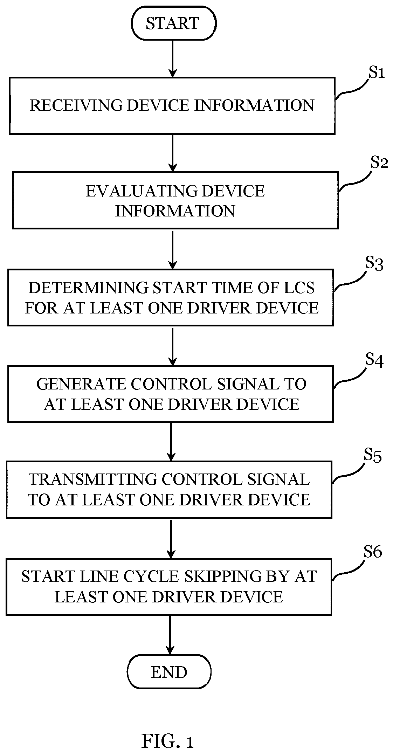

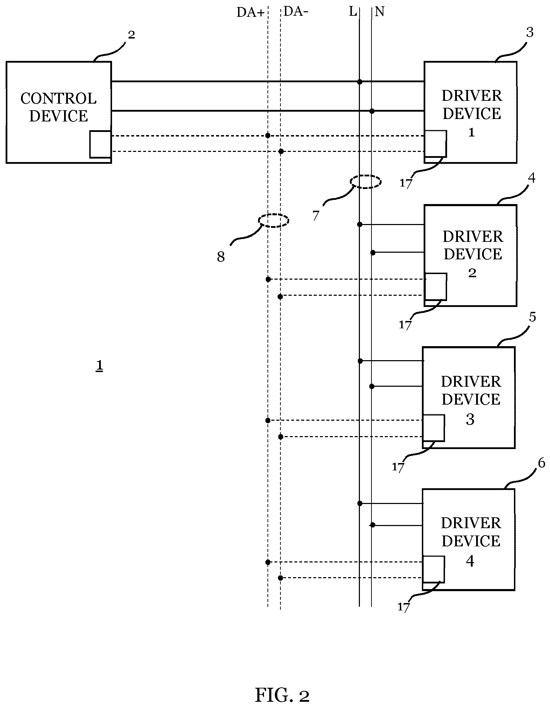

Fig. 1 shows a flowchart illustrating an application example of the method for controlling an infrastructure system 1 including a plurality of driver devices 3, 4, 5, 6 and a control device 2 as illustrated and discussed with reference to fig. 2.

Each of the plurality of driver devices 3, 4, 5, 6 is configured to be supplied with a mains current $I_{mains}$, from a mains grid 7 via a power factor correction circuit 10. The driver devices 3, 4, 5, 6 are each configured to generate and output a load current $I_{LED}$ to a load, e.g., a lighting module 21.

The driver devices 3, 4, 5, 6 are configured to operate in a line cycle skipping mode, wherein in the line cycle skipping mode, the power factor correction circuit 10 is configured to reduce or inhibit power consumption from the mains grid 7 for at least a (first) part of at least one line cycle of the mains grid 7.

The control device 2 is configured to generate and transmit control signals to the driver devices 3, 4, 5, 6 via a control network 8. The control device 2 is configured to receive device information from the driver devices 3, 4, 5, 6 via the control network 8.

The method includes a step S1 of the control device 2 receiving in the device information from at least one driver device 3, 4, 5, 6, information on a power consumption and information on an intention to switch into the line cycle skipping mode of at least one of the driver devices 3, 4, 5, 6.

In step S2, the control device evaluates the received device information from the at least one driver device 3, 4, 5, 6. In particular, the control device 2 evaluates the received device information and extracts from the received the device information, the information on a power consumption and information on the intention to switch into the line cycle skipping mode of the at least one of the driver device 3, 4, 5, 6.

The method includes a step S3 of determining, by the control device 2, a start time of the line cycle skipping for the at least one driver device 3, 4, 5, 6 based on the received device information of the at least one driver device 3, 4, 5, 6.

The method proceeds with step S4 of the control device 2 generating the control signal to the at least one driver device 3, 4, 5, 6 including information on the determined at least one start time of the line cycle skipping for the respective at least one driver device 3, 4, 5, 6.

In step S5, the control device 2 transmits the generated control signal to the at least one driver device 3, 4, 5, 6. The transmitted control signal includes the information on the determined at least one start time of the line cycle skipping for the respective at least one driver device 3, 4, 5, 6.

The at least one driver device 3, 4, 5, 6 receives the control signal that includes the information on the determined at least one start time of the line cycle skipping transmitted by the control device 2 via the control network. The at least one driver device 3, 4, 5, 6 extracts from the received control signal the information on the determined at least one start time of the line cycle skipping, and evaluates the information on the determined at least one start time of the line cycle skipping.

In step S6, the at least one driver device 3, 4, 5, 6, starts the line cycle skipping based on the information on the determined at least one start time of the line cycle skipping included in the control signal received from the control device 2 and evaluated in the at least one driver device 3, 4, 5, 6.

Fig. 2 provides an overview of the architecture of an infrastructure system for implementing the method for controlling an infrastructure system according to the embodiment.

The infrastructure system 1 may be a building infrastructure system, and include or consist of, e.g., a lighting system. The infrastructure system may include a HVAC system, a ventilation system, a route guiding system, a shading system using blinds, to name some further examples for building infrastructure systems.

The infrastructure system 1 includes a control device 2. The control device 2 is a central device for controlling a plurality of driver devices 3, 4, 5, 6 of the infrastructure system 1.

A mains grid 7, in particular an AC mains grid provides the devices of the infrastructure system 1 with electric energy. The exemplary mains grid 7 of fig. 2 includes two phases L and N.

Each of the shown driver devices 3, 4, 5, 6 of the infrastructure system 1 and the control device 2 has a mains interface for connecting to the mains grid 7.

A control network 8 provides a communication and control capability for the devices of the infrastructure system 1. The devices of the infrastructure system 1 may provide device information (e.g., status information of the driver device 3, 4, 5, 6) and control information using communication signals via the control network 8.

The control network 8 depicted in fig. 2 is a wired network including connections D+ and DA- for communication according to the DALI standard known in lighting control.

Alternatively, the control network 8 may include at least in part include a wireless network.

In particular, the control device 2 generates control signals and transmits the generated control signals via the control network 8 to the driver devices 3, 4, 5, 6. In particular, the control device 2 generates the control signal for each driver device 3, 4, 5, 6 individually and transmits the generated control signals via the control network 8 to the driver devices 3, 4, 5, 6 individually.

The driver devices 3, 4, 5, 6 may each generate a device signal and transmit the generated device signal via the control network 8 to the control device 2. In particular, each driver device 3, 4, 5, 6 generates the device signal including device information of the specific driver device 3, 4, 5, 6 and transmit the generated device signal via the control network 8 to the control device 2.

From fig. 2, it becomes evident that in cases in which the infrastructure system 1 includes a plurality of driver devices 3, 4, 5, 6 that have the capability to switch into the line cycle skipping mode, there might arise the problem that at least two of the driver devices 3, 4, 5, 6 switch into the line cycle mode simultaneously, and even worse, decrease or inhibit entirely power consumption from the mains grid 7 at a same time. At least two of the driver devices 3, 4, 5, 6 may increase for respective compensation of skipped line cycle periods the power consumption from the mains grid 7 also at a same time. This results in synchronous line cycle skipping operation of the driver devices 3, 4, 5, 6 and results in a respective time sequence of peaks and drops in power demand on the mains grid 7, which adversely affects operation of the infrastructures system 1 and may influence design requirements for the mains grid 7 supplying the infrastructure system 1. The approach discussed with reference to the flowchart of fig. 1 enables to determine the times when to start the line cycle skipping, in particular when to start the at least one half cycle of the line cycle of the mains grid 7, in which energy consumption from the mains grid is reduced or suppressed for each driver device 3, 4, 5, 6 individually. The control device 2 determines the times when to start the line cycle skipping, in particular when to start the at least one half cycle of the line cycle of the mains grid 7, in which energy consumption from the mains grid is reduced or suppressed for each driver device 3, 4, 5, 6 such that the summed power consumption of the driver device 3, 4, 5, 6 is levelled. The control device 2 uses the device information that includes the individual power consumption of each driver device 3, 4, 5, 6 in order to determine the times when to start the line cycle skipping, in particular when to start the at least one half cycle of the line cycle of the mains grid 7, in which energy consumption from the mains grid is reduced or suppressed for each driver device 3, 4, 5, 6.

In the specific example of the infrastructure system 1 including the driver devices 3, 4, 5, 6 of fig. 2, the driver devices 3 and 4 may operate with 1 % of their respective rated power and consume power of 1 W each. The driver devices 5 and 6 may operate with 10 % of their respective rated power and consume power of 10 W each.

The control device 2 obtains the respective device information including the mains current of each driver device 3, 4, 5, 6 or at least intended values for power consumption from each driver device 3, 4, 5, 6 via the control network 8.

The control device 2 forms a first group of driver devices including driver devices 1 and 3 and a second group of driver devices including driver devices 2 and 4 based on the received device information that includes on the one hand the intention of the driver devices 3, 4, 5, 6 to switch into the line cycle skipping mode, and, on the other hand, the respective values of power consumption for the driver devices 3, 4, 5, 6. The formed first and second groups of driver devices each include a same summed level of power consumption of 11 W each, resulting in a same level of power drawn during at least one half cycle of the line cycle of the mains grid 7 for each of the first and second groups of driver devices. The control device 2 determines a first start time of the first group of driver devices 3, 4, 5, 6 including the first driver device 3 and the third driver devices 5 and a second start time of the second group of driver devices 3, 4, 5, 6 including the second driver device 4 and the fourth driver device 6. The first start time and the second start time differ such that the driver devices 3, 5 of the first group consume power from the mains grid 7 while simultaneously the driver devices 4, 6 of the second group do not consume power from the mains grid 7 and vice versa. Hence, the aggregated power demand or load to the mains grid 7 by the power devices 3, 4, 5, 6 is advantageously levelled during the half cycles of the lien cycles of the mains grid 7.

For sake of completeness, it is worth noting that, if not implementing the claimed approach illustrated by fig. 1, the first and second driver devices 3 and 4 may simultaneously consume power from the mains grid 7, which amounts to a summed power consumption of 2 W. At times at which the third and fourth driver devices 5, 6 consume simultaneously power from the mains grid 7, the summed power consumption of the third and fourth driver devices 5, 6 amounts to a summed power consumption of 20 W. Hence, even in case the first and second driver devices 3 and 4 consume power from the mains grid 7 at times at which the third and fourth driver devices 5, 6 do not consume power from the mains grid 7, the entire power consumption would fluctuate or oscillate between consumption values that differ by 18 W.

It is evident, that the possibilities for the control device 2 to balance the load demand on the mains grid by determining and communicating start times for the part of the line cycles during which the driver devices 3, 4, 5, 6 do not consume power from the mains grid 7 increases with the number of driver devices 3, 4, 5, 6, that perform line cycle skipping, and further increase with the number of driver devices 3, 4, 5, 6 of the infrastructures system 1 that participate in the control method for lien cycle skipping as discussed with reference to fig. 1.

The exemplary control device 2 and the scenario discussed with reference to fig. 2 determines a first group of driver devices 3, 4, 5, 6and a second group of driver devices 3, 4, 5, 6. The presented approach is not restricted to two groups of driver devices 3, 4, 5, 6. The approach is applicable to three or more groups of driver devices 3, 4, 5, 6 in a corresponding manner.

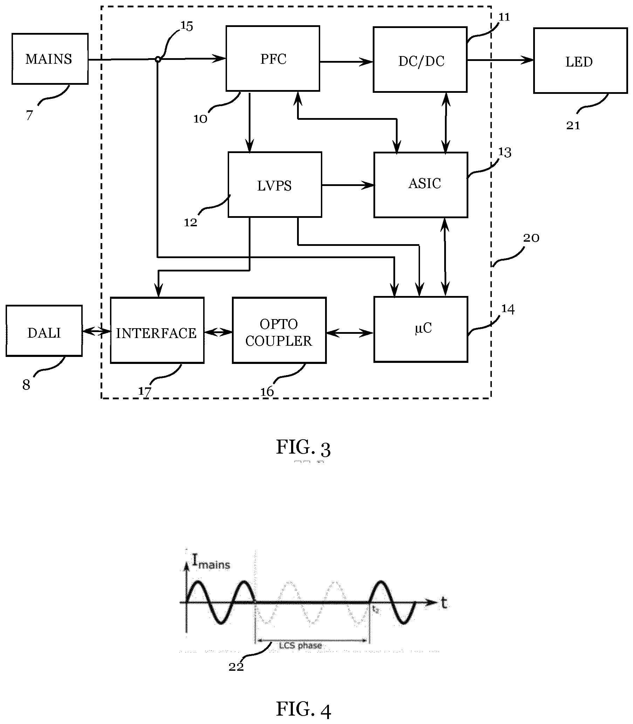

Fig. 3 presents an overview over the architecture of a light driver device as a particular example of the driver device 3, 4, 5, 6.

The light driver device, e.g., a LED driver device 20, is one specific example of a driver device 3, 4, 5, 6 in an implementation of the invention. Nevertheless, the infrastructure system 1 is not limited to a lighting system comprising a plurality of LED driver devices 20. Alternate embodiments of the infrastructure system 1 may include other driver devices 3, 4, 5, 6, a switched mode power supply (SMPS), or other types of AC /DC converter devices.

The LED driver device 21 of fig. 3 has a mains interface not explicitly shown in fig. 1 for connecting the LED driver device 20 with the mains grid 7. The mains grid 7 supplies not only the LED driver device 21 with a mains supply current Imains at a mains supply voltage $U_{mains}$, but also other electric devices including, but not limited to further LED driver devices 20 and other electronic devices. The other electronic devices may include, e.g., SMPSs and driver devices, supplied via the mains grid 7 with electric power.

The LED driver device 20 includes a communication interface 17. The communication interface 17 enables transmitting and receiving communication signals via a wired or wireless communication network 8, which may operate based on at least at least one of a DALI lighting network 4, DALI 2, DALI+, DiiA, D4i, KNX, ProfiNet, ProfiBus, Bluetooth, WLAN, Wifi, Thread, Matter, or corresponding standards in the technical fields of lighting systems, communication systems, and smart home systems.

The LED driver device 20 generates and outputs a load current, in particular a LED current $I_{LED}$ to at least one lighting module 21. The LED current $I_{LED}$ is a DC current supplying at least one, usually even a plurality of LEDs of the lighting module 3, which may be arranged in series, in parallel, or in a combination of series and parallel circuit configuration.

The LED driver device 20 includes a control circuit, which in fig. 3 includes a microcontroller 14 and an ASIC 13. The control circuit includes also a memory providing data storage capacity for storing information. The memory may form part of the microcontroller 14 or be separate from the microcontroller 14.

The microcontroller 14 may, as indicated in fig. 1, monitor at least one of the mains supply current $I_{mains}$ or the mains supply voltage $U_{mains}$ provided via the mains interface of the LED driver device 20 with the mains grid 7. In particular, the LED driver device 20 may include measuring means for measuring the mains supply current $I_{mains}$. The measuring means may include a shunt resistor and provide a voltage representative to the mains supply current $I_{mains}$ to an input of the microcontroller 14 as indicated in fig. 3, or the ASIC 13.

The microcontroller 14 may, as indicated in fig. 1, receive and transmit communication signals via the communication interface 17.

The LED driver device 20 may be adapted to fulfil SELV requirements and implement a SELV barrier as indicated in fig. 1 by the optocoupler 16, which isolates galvanically the communication interface 17 on a primary side of the SELV barrier from the microcontroller 14 on a secondary side of the SELV barrier.

For the description of embodiments, the structure of the power supply path of the LED driver device 20 is of particular interest. The power supply path includes a power factor correction circuit 10 (PFC circuit 10), followed by a DC/DC converter circuit 11.

The exemplary LED driver device 20 is configured to reduce or even suppress (inhibit entirely) a power input (power consumption) of the PFC circuit 10 for at least one half-cycle, or a plurality of half-cycles of the mains grid current Imains (mains supply current) that is input to the LED driver device 20 via the mains interface from the mains grid 7.

The control circuit, e.g. the ASIC 13 forming part of the control circuit of the LED driver device 20 may reduce or even suppress (inhibit entirely) the power input (power consumption) of the PFC circuit 10 for at least one half-cycle, or a plurality of half-cycles of the mains supply current $I_{mains}$. Alternatively, a control circuit of another component of the LED driver device 20 may control the PRC circuit 10 to reduce or even suppress (inhibit entirely) the power input (power consumption) of the PFC circuit 10 for at least one half-cycle, or a plurality of half-cycles of the mains supply current $I_{mains}$.

The LED driver device 20 is configured to admit or to increase the power input (power consumption) of the PFC circuit 10 for at least one other half-cycle, or a plurality of other half-cycles of the mains grid current $I_{mains}$ input to the LED driver device 20 via the mains interface.

The LED driver device 20 is configured to distribute the reduction in power input (power consumption) of the PFC circuit 10 for the at least one half-cycle, or the plurality of half-cycles of the mains supply current $I_{mains}$ onto the at least one other half-cycle, or the plurality of other half-cycles of the mains supply current $I_{mains}$ in order to compensate the reduction in power input (power consumption) of the PFC circuit 10 for the at least one half-cycle, or the plurality of half-cycles of the mains supply current $I_{mains}$.

The LED driver device 20 may perform the compensation of the reduced power input of the PFC circuit 10 while operating in the LCS mode in particular in the immediately following line cycles of the mains grid 7 after switching back into a standard operational mode, in particular terminating operation in the LCS phase of the LCS mode of the LED driver device 20.

In other terms, the LED driver device 20 is set up to greatly reduce or completely prevent a power consumption by the PFC circuit 10 for at least one first part of a line cycle with respect to at least one line cycle of the mains grid 7. In particular, the LED driver device 1 is configured to reduce or completely prevent the power consumption by the PFC circuit 10 from the mains grid 7 for at least one half-cycle of the mains grid 7.

The LED driver device 20 or one of its components may include a control circuit, which is configured control the switching process between the LCS mode and the standard operational mode. Such control circuit may further realize analogously at least some of the further features described below.

Additionally, the LED driver device 20 is configured to distribute a power, which might have been drawn during the at least one omitted line cycle of a number of line cycles according to a pattern, after switching back into the standard operational mode.

Furthermore, the LED driver device 20 may be configured to increase or completely permit the power consumption of the PFC circuit 10 for at least one second part of at least one correspondingly different line cycle to the first part of at least one line cycle. Preferably, the LED driver device 20 may be configured to increase or permit the power consumption of the PFC circuit 10 for the correspondingly remaining line cycles, with respect to the number of line cycles.

With regard to the strong reduction or complete suppression of the power consumption of the PFC circuit 10, it is noted that it is particularly advantageous if the power consumption of the PFC circuit 10 is reduced or completely suppressed depending on a respective load of the LED driver device, represented by the lighting module 21 in fig. 3.

Concerning reducing or completely suppressing the power consumption of the PFC circuit 10 depending on the actual load of the LED driver device 20, the (first) part including the number of omitted line cycles may be varied based on the current load of the LED driver device 20.

Advantageously, the PFC circuit 10 draws the mains current $I_{mains}$, preferably a current with a sinusoidal waveform, from the mains grid 7 by greatly increasing or completely allowing the power consumption of the PFC circuit 10.

Conventionally, the LED driver device 20 may generate the pattern, in particular generate the pattern randomly. In this case, the LED driver device 20 or the aforementioned control circuit may have a random generator. Contrary thereto, the LED driver device 20 according to the embodiment switches in the LCS mode based on control information received from the control device 2 via the control network 8 and the communication interface 17 of the LED driver device 20.

The LED driver device 20 may select the pattern from a number of patterns based on the control information received from the control device 2 via the control network 8 and the communication interface 17. In this example, the LED driver device 20 or the aforementioned control circuit may have a memory that stores a plurality of patterns, preferably a plurality of preconfigured patterns.

The plurality of patterns, in particular the number of preconfigured patterns, may be stored into the LED driver device 20, e.g., in the memory during manufacturing process of the LED driver device 20 or during a commissioning process of the lighting system or the infrastructure system 1.

Furthermore, the LED driver device 20 may select a particular pattern from a number of patterns based on the control information received from the control device 2 via the control network 8 and the communication interface 17, or generate the pattern based on the control information received from the control device 2 via the control network 8 and the communication interface 17, and an identifier assigned to the LED driver device 20.

The PFC circuit 10 generates and outputs a DC voltage $U_{DC}$ and a DC current $I_{DC}$ based on the mains supply voltage $U_{mains}$ and the mains supply current $I_{mains}$. The PFC circuit 10 outputs the DC voltage $U_{DC}$ and the DC current $I_{DC}$ via a DC link to a DC/DC converter circuit 11.

The PFC circuit 10 represents a first stage, and the DC/DC converter circuit 11, represents a second stage in fig. 4, wherein the first stage and the second stage are linked via the DC link. The DC link in fig. 3, includes a direct connection for the DC voltage $U_{DC}$ and the DC current $I_{DC}$ without further circuit elements between the first stage and the second stage. The DC link may include on or more capacitors providing the electric energy while the PFC circuit 10 (first stage) is operating in the LCS mode. The capacitors may be capacitors at the output and forming part of the PFC circuit 10, and/or at the input and forming part of the DC/DC converter circuit 11, which not explicitly shown in fig.4.

The PFC circuit 10 may be a boost-type power factor correction circuit (boost-type PFC) that outputs to the DC link a voltage $U_{DC}$, e.g., about 400 V, which exceeds an voltage amplitude of the mains grid 7 at the input of the PFC circuit 10. In a typical example, the voltage amplitude at the input of PFC circuit 10 will amount to $230\,Vrms \cdot \sqrt{2} \sim 325\,V$. As long as the voltage $U_{DC}$ at the DC link exceeds the voltage amplitude at the input of the PFC circuit 10, the PFC circuit 10 will draw no current while in the LCS mode. This enables to dispense with arranging a switch between the PFC circuit 10, and the DC/DC converter circuit 11.

Alternatively, in case the PFC circuit 10 is implemented in boost topology, and a capacity on the DC link which is small and a significant load at the load interface of the driver device 3, 4, 5, 6, a switch for separating PFC circuit 10 and the DC/DC converter circuit 11 may be advantageous, as in this particular case, the voltage $U_{DC}$ at the DC link may be smaller than the voltage at the input of the PFC circuit 10.

Alternatively, the DC link connecting the PFC circuit 10 and the DC/DC converter circuit 11, may include a switch circuit (LCS switch) in the connection for the DC voltage $U_{DC}$ and the DC current $I_{DC}$ between PFC circuit 10 and the DC/DC converter circuit 11. The control circuit controls the switch to switch into the open state (non-conducting state), when the driver device 3, 4, 5, 6 is starting to operate in the LCS mode, e.g. during the LCS phase.

Using the switch on the DC link in is particularly advantageous for an implementation of the PFC circuit 10 in a converter technology other than a boost type PFC, e.g. as a flyback-type PFC. The flyback-type PFC may output to the DC link a voltage $U_{DC}$, which is lower than the voltage amplitude of the mains grid 7 at the input of the PFC circuit 10. In order to avoid that the PFC circuit 10 draws a current via the mains interface while in the LCS mode, the LCS switch will be switched into an open state when switching into the LCS mode. The switch will be closed again (conducting state) when switching the driver device 3, 4, 5, 6 back from the LCS phase of the LCS mode into the second phase of the LCS mode.

Furthermore, an additional capacitor providing the electric energy while the PFC circuit 10 is operating in the LCS phase of the LCS mode may be arranged on the DC link externally to PFC circuit 10 and the DC/DC converter circuit 11.

The DC/DC converter circuit 11 is an active electric component of the LED driver device 20. The DC/DC converter circuit 11 corresponds to an electrically active component, which, using an electrical input signal provides an electrical output signal, which is different from the electric input signal. The input signal and the output signal of the DC/DC converter circuit 11 can be electrical voltage signals. The DC/DC converter circuit 11 preferably receives the output signal of the PFC circuit 10 as the input signal via the DC link.

In particular, the DC/DC converter circuit 11 implements a dimming function of the LED lighting module 21 supplied by the DC/DC converter circuit 11 by controlling the load current ILED.

The DC/DC converter circuit 11 may include at least a part of the control circuit.

The DC/DC converter circuit 11 may be implemented in a SMPS circuit topology.

The DC/DC converter circuit 11 generates and outputs the load current $I_{LED}$ and the load voltage $U_{LED}$ for output via load interface (LED interface) to the lighting module 21. While operating in the LCS phase of the LCS mode, the DC/DC converter circuit 11 generates the load current $I_{LED}$ based on electric energy drawn from capacitors arranged on the DC link linking the PFC circuit 10 and the DC/DC converter circuit 11. Hence, maintaining the load current $I_{LED}$ while simultaneously operating in the LCS mode also ensures a constant light output by the LEDs of the lighting module 21 without any flicker notable to a human observer.

The PFC circuit 10 also supplies a low voltage power supply 12 (LVPS 12) with power. The LVPS 12 generates and outputs low voltages for supplying the other active components of the LED driver device 20, e.g., the communication interface 17, the ASIC 13 and the microcontroller 14.

Fig. 4 illustrates an example for controlling switching into the LCS mode of the driver device 3, 4, 5, 6 according to an embodiment.

In particular, Fig. 4 illustrates a time behavior of the mains current $I_{mains}$ illustrating an example of the LCS mode of the driver device 3, 4, 5, 6.

At a time $t_1$ in fig. 4, the current shown on the ordinate axis is the mains current $I_{mains}$ drawn by (or input to) each of the driver devices 3, 4, 5, 6 from the mains grid 7. As shown in fig. 4, the driver device 3, 4, 5, 6 switches into the LCS mode based on a control signal received via the control network 8 from the control device 2. While operating in the LCS mode, the driver device 3, 4, 5, 6 at least reduces, in the shown example of fig. 4 entirely inhibits a power input from the mains grid 7 for at least a first part of at least one line cycle of the mains grid 7.

In the specific example of fig. 2, the driver device 3, 4, 5, 6 fully inhibits the mains current Imains input to the PFC circuit 10 of the driver devices 3, 4, 5, 6 during the predetermined time 22 of the LCS phase comprising five half-cycles of the line cycles of the mains grid 7. After the predetermined time 22, at a time $t_2$, has elapsed, the driver device 3, 4, 5, 6 switches back from the LCS phase of the LCS mode into a standard operational phase. In the standard operational phase, the driver device 3, 4, 5, 6 compensates the reduced, in the example of fig. 4 even fully inhibited power input in at least the first part of the at least one line cycle by increasing the power input from the mains grid 7 for at least a second part of a sequence of line cycles after time $t_2$. This second part of an increased power input to the PFC circuit 10 is not specifically shown in fig. 4.

Fig. 4 illustrates the specific embodiment, in which the driver device 3, 4, 5, 6 switches back from the LCS phase of the LCS mode into the standard operational phase in response to determining that a predetermined time since switching into the LCS phase of the LCS mode has elapsed. The predetermined time 22 of the LCS phase shown in fig. 4 includes five half-cycles of the line cycles of the mains grid 2, which extend from the time $t_1$ to the time $t_2$.

The driver device 3, 4, 5, 6 or the control device 2 of the infrastructure system 1 may determine the time 22 of the LCS phase to extend from the time $t_1$ to the time $t_2$ and control the driver device 3, 4, 5, 6 of the infrastructure system 1 accordingly.

It is evident that capacitors connected to the DC link connecting the PFC circuit 10 and the DC/DC converter 11 have to store sufficient electric energy in order to drive a DC current $I_{DC}$ via the DC link from the PFC circuit 10 to the DC/DC converter circuit 11 without resulting in a drop in the load current $I_{LED}$ at the output of the DC/DC converter circuit 11 within the time 22.

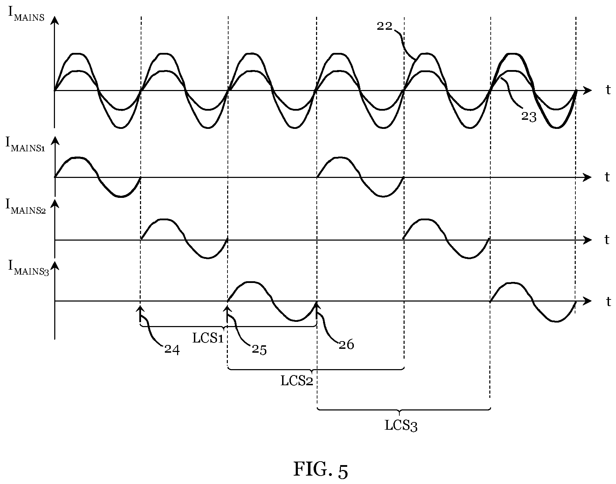

Fig. 5 shows an exemplary time behavior of the mains grid currents in an application example of an embodiment illustrating advantages in an application of the infrastructure system 1.

The infrastructure system 1 includes three driver devices 3, 4, 5, 6, which participate in the presented approach for controlling the timing of the line cycle skipping operational mode by the control device 2.

The upper portion of fig. illustrates two exemplary time behaviors for the mains grid current $I_{mains}$ for a sequence of line cycles of the mains grid.

The first exemplary time behavior 22 for the mains grid current Imains corresponds to a mains grid current $I_{mains}$ without line cycle skipping.

The second exemplary time behavior 23 for the mains grid current $I_{mains}$ corresponds to a mains grid current $I_{mains}$ in the line cycle skipping mode for the three driver devices 3, 4, 5, 6, which participate in the presented approach for controlling the timing of the line cycle skipping mode by the control device 2. The amplitude values of the first exemplary time behavior 22 and the second exemplary time behavior 23 of the schematic illustration of fig. 5 are not in proportion or a same ordinate scale.

The lower part of fig. 5 illustrates the time behavior of the individual mains grid currents $I_{mains1}$, Imains $_2$, $I_{mains3}$ of the three driver devices 3, 4, 5, 6 participating in the presented approach for controlling the timing of the line cycle skipping mode by the control device 2.

The first driver device 3, 4, 5, 6 receives a first start time 24 in the control signal including information on the determined at least one start time of the line cycle skipping from the control device 2. The first driver device 3, 4, 5, 6 accordingly consumes no power from the mains grid 7 during the time LCS1 (LCS phase LCS1) including full two line cycles of the mains grid 7 immediately following to the first start time 24.

The second driver device 3, 4, 5, 6 receives a second start time 25 in the control signal including information on the determined at least one start time of the line cycle skipping from the control device 2. The second start time 25 is during the time LCS1 (LCS phase LCS1) during which the first driver device 3, 4, 5, 6 does not consume power from the mains grid 7. The second driver device 3, 4, 5, 6 accordingly consumes no power from the mains grid 7 during the time LCS2 (LCS phase LCS2) including full two line cycles of the mains grid 7 immediately following to the second start time 25.

The third driver device 3, 4, 5, 6 receives a third start time 26 in the control signal including information on the determined at least one start time of the line cycle skipping from the control device 2. The third start time 26 is during the time LCS1 during which the first driver device does not consume power from the mains grid 7 and during the time LCS2 during which the second driver device 3, 4, 5, 6 consumes no power from the mains grid 7. The third driver device 3, 4, 5, 6 accordingly consumes no electric power from the mains grid 7 during the time LCS3 (LCS phase LCS3) including full two line cycles of the mains grid 7 immediately following to the third start time 26. During the time LCS3, nevertheless, the first and second driver device 3, 4, 5, 6 again each include one full line cycle of consuming power from the mains grid 7.

As consequence of the first, second and third driver devices 3, 4, 5, 6 performing line cycle skipping based on the control information generated and communicated by the control device 2, a time behavior of the summed mains current $I_{mains}$ according to the time behavior 23 of the upper portion of fig. 5 results. The time behavior 23 combines the advantages of the line cycle skipping operation for reduced total harmonic distortion (THD) with the suppression of drops and peaks in the mains current $I_{mains}$ from an unsynchronized switching into the line cycle skipping operation of plural driver devices 3, 4, 5, 6.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

The features described in the discussion of specific embodiments and depicted in the figures may be combined with each other for the invention defined in the attached claims.

## Claims

1. Infrastructure system, in particular a lighting system, the infrastructure system comprising

   a plurality of driver devices (3, 4, 5, 6) each configured to be supplied via a power factor correction circuit (10) from a mains grid (7), and to generate and output a load current, wherein the driver devices (3, 4, 5, 6) are configured to be able to operate in a line cycle skipping mode, wherein in the line cycle skipping mode, the power factor correction circuit (10) is configured to reduce or inhibit power consumption from the mains grid (7) for at least a first part of at least one line cycle of the mains grid (7); a control device (2) configured to generate and transmit control signals to the driver devices (3, 4, 5, 6) via a control network (8), and receive device information from the driver devices (3, 4, 5, 6) via the control network (8);
   **characterized in**
   **that** the control device (2) is configured to receive, in the device information, information on a power consumption and information on an intention to switch into the line cycle skipping mode of at least one of the driver device (3, 4, 5, 6);
   to determine a start time of the line cycle skipping for the at least one driver device (3, 4, 5, 6) based on the received device information of the at least one driver device (3, 4, 5, 6) and to generate the control signal to the at least one driver device (3, 4, 5, 6) including information on the determined at least one start time of the line cycle skipping; and
   **that** the at least one driver device (3, 4, 5, 6) is configured to start line cycle skipping based on the information on the determined at least one start time of the line cycle skipping included in the transmitted control signal.

2. Infrastructure system according to claim 1, wherein each of the driver devices (3, 4, 5, 6) is configured to determine its power consumption from the mains grid (7), and to generate the device information including the information on power consumption based on the determined power consumption.

3. Infrastructure system according to claim 1 or 2, wherein

   at least one first driver device (3, 4, 5, 6) and at least one second driver device (3, 4, 5, 6) of the driver devices (3, 4, 5, 6) transmit the device information including the information on a power consumption and information on an intention to switch into the line cycle skipping mode to the control device (2), and

the control device (2) is configured to determine a first start time of the line cycle skipping of the at least one first driver device (3, 4, 5, 6) and a second start time of the line cycle skipping of the at least one second driver device (3, 4, 5, 6), wherein the determined first start time and second start time differ.

4. Infrastructure system according to claim 3, wherein the control device (2) is configured to determine a difference between a first start time of the line cycle skipping of the at least one first driver device (3, 4, 5, 6) and a second start time of the line cycle skipping of the at least one second driver device (3, 4, 5, 6) by minimizing a peak power consumption of the summed power consumption of the at least one first driver device (3, 4, 5, 6) and the at least one second driver device (3, 4, 5, 6).

5. Infrastructure system according to one of the preceding claims, wherein
the control device (2) is configured to determine a first group including at least one first driver device (3, 4, 5, 6) and at least one second group including at least one at least one second driver device (3, 4, 5, 6), wherein a difference between a summed power consumption of the at least one first driver device (3, 4, 5, 6) in the first group and a summed power consumption of the at least one second driver device (3, 4, 5, 6) of the at least one second group is smaller than a first threshold.

6. Infrastructure system according to one of the preceding claims, wherein
the control signal includes the information on the determined start time of the line cycle skipping for the at least one driver device (3, 4, 5, 6) as an integer number of line cycle periods of the mains grid (7).

7. Infrastructure system according to one of the preceding claims, wherein
the control signal includes the information on the determined start time of the line cycle skipping for the at least one driver device (3, 4, 5, 6) as a time delay information for delaying the determined start time of the line cycle skipping for the at least one driver device (3, 4, 5, 6).

8. Infrastructure system according to one of the preceding claims, wherein

the control device (2) is configured to determine whether a first intended start time of the line cycle skipping for the at least one first driver device (3, 4, 5, 6) and a second intended start time of the line cycle skipping for the at least one second driver device (3, 4, 5, 6) are the same based on the received driver information from the at least one first driver device (3, 4, 5, 6) and the at least one second driver device (3, 4, 5, 6), and

in case the first and the second start time are the same, the control device (2) is configured to generate and transmit the control signals including information for shifting the start time for one of the at least one first driver device (3, 4, 5, 6) and the at least one second driver device (3, 4, 5, 6).

9. Infrastructure system according to one of the preceding claims, wherein
each of the driver devices (3, 4, 5, 6) are configured to perform line cycle skipping in a same time scheme, or perform line cycle skipping based on line cycle skipping information received from the control device (2).

10. Infrastructure system according to one of claims 1 to 8, wherein
each of the driver devices (3, 4, 5, 6) are configured to perform line cycle skipping based on line cycle skipping information comprising a time scheme and included in the control signal.

11. Infrastructure system according to claim 10, wherein the time scheme includes a delay information including a predetermined integer number of line cycles of the mains grid (7), which the at least one driver device (3, 4, 5, 6) delays switching into the line cycle skipping mode in response to receiving the control signal including information on the determined at least one start time of the line cycle skipping.

12. Infrastructure system according to one of the preceding claims, wherein
the control network (8) is a wired network, in particular a lighting control network, in particular based on the DALI standard, or a wireless network.

13. Method for controlling an infrastructure system (1), in particular a lighting system, wherein the infrastructure system (1) comprises a plurality of driver devices (3, 4, 5, 6) each configured to be supplied via a power factor correction circuit (10) from a mains grid (7), and to generate and output a load current,

wherein the driver devices (3, 4, 5, 6) are configured to operate in a line cycle skipping mode, wherein in the line cycle skipping mode, the power factor correction circuit (10) is configured to reduce or inhibit power consumption from the mains grid (7) for at least a first part of at least one line cycle of the mains grid;
a control device (2) configured to generate and transmit control signals to the driver devices (3, 4, 5, 6) via a control network (8), and receive device information from the driver devices (3, 4, 5, 6) via the control network (8); and

**characterized in**
comprising

receiving (S1), by the control device (2), in the device information, information on a power consumption and information on an intention to switch into the line cycle skipping mode of at least one of the driver device (3, 4, 5, 6);
determining (S3), by the control device (2), a start time of the line cycle skipping for the at least one driver device (3, 4, 5, 6) based on the received device information of the at least one driver device (3, 4, 5, 6);
generating (S4), by control device (2), the control signal to the at least one driver device (3, 4, 5, 6) including information on the determined at least one start time of the line cycle skipping; and
starting (S6), by the at least one driver device (3, 4, 5, 6), line cycle skipping based on the information on the determined at least one start time of the line cycle skipping included in the transmitted control signal.

START

RECEIVING DEVICE INFORMATION — S1

EVALUATING DEVICE INFORMATION — S2

DETERMINING START TIME OF LCS FOR AT LEAST ONE DRIVER DEVICE — S3

GENERATE CONTROL SIGNAL TO AT LEAST ONE DRIVER DEVICE — S4

TRANSMITTING CONTROL SIGNAL TO AT LEAST ONE DRIVER DEVICE — S5

START LINE CYCLE SKIPPING BY AT LEAST ONE DRIVER DEVICE — S6

END

FIG. 1

FIG. 2

FIG. 3

FIG. 4

FIG. 5

Europäisches
Patentamt
European
Patent Office
Office européen
des brevets

# EUROPEAN SEARCH REPORT

**Application Number**

EP 24 17 1485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 146 169 B2 (MCDOUGLE ANTHONY N [US]; LEDVANCE LLC [US]) 12 October 2021 (2021-10-12) * column 1, lines 18-21; figures 1-19 * * column 2, line 14 - column 5, line 19 * * column 7, line 27 - column 20, line 16 * * esp. Figs. 3, 4, 8b, 9, 12a, 12b, 13a, 13b * | 1-13 | INV. H05B45/35 H02J3/14 |
| A | US 2010/174668 A1 (FINCH MICHAEL F [US] ET AL) 8 July 2010 (2010-07-08) * page 1, paragraph 2; figures 1-24 * * page 1, paragraph 8 - page 3, paragraph 24 * * page 3, paragraph 30 - page 8, paragraph 65 * * esp. pars. [0033], [0061]; Fig. 4; claims 1, 4-6, 8, 10, 16, 19, 21 * | 1-13 | |
| A | CHRISTOPHER FIORENTINO ET AL: "A Line Cycle Skipping method to improve the light load efficiency and THD of PFC converters", APPLIED POWER ELECTRONICS CONFERENCE AND EXPOSITION (APEC), 2013 TWENTY-EIGHTH ANNUAL IEEE, IEEE, 17 March 2013 (2013-03-17), pages 368-373, XP032410363, DOI: 10.1109/APEC.2013.6520235 ISBN: 978-1-4673-4354-1 * the whole document * | 1-13 | TECHNICAL FIELDS SEARCHED (IPC) H05B H02J G06Q H02M |

The present search report has been drawn up for all claims

| Place of search | Date of completion of the search | Examiner |
|---|---|---|
| Munich | 9 September 2024 | Brosa, Anna-Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1485

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | | Publication date | Patent family member(s) | | Publication date |
|---|---|---|---|---|---|
| US 11146169 | B2 | 12-10-2021 | US | 2017271979 A1 | 21-09-2017 |
| | | | US | 2020259414 A1 | 13-08-2020 |
| US 2010174668 | A1 | 08-07-2010 | AU | 2009290577 A1 | 19-07-2012 |
| | | | AU | 2009290578 A1 | 19-07-2012 |
| | | | AU | 2009290579 A1 | 26-07-2012 |
| | | | AU | 2009290585 A1 | 26-07-2012 |
| | | | AU | 2009290586 A1 | 19-07-2012 |
| | | | AU | 2009290588 A1 | 18-03-2010 |
| | | | AU | 2009290589 A1 | 26-07-2012 |
| | | | AU | 2009290590 A1 | 26-07-2012 |
| | | | AU | 2009290591 A1 | 26-07-2012 |
| | | | AU | 2009291569 A1 | 26-07-2012 |
| | | | AU | 2009291570 A1 | 26-07-2012 |
| | | | AU | 2009291571 A1 | 26-07-2012 |
| | | | AU | 2009291572 A1 | 26-07-2012 |
| | | | CA | 2722870 A1 | 18-03-2010 |
| | | | CA | 2722999 A1 | 18-03-2010 |
| | | | CA | 2723051 A1 | 18-03-2010 |
| | | | CA | 2723055 A1 | 18-03-2010 |
| | | | CA | 2723060 A1 | 18-03-2010 |
| | | | CA | 2723067 A1 | 18-03-2010 |
| | | | CA | 2723073 A1 | 18-03-2010 |
| | | | CA | 2723083 A1 | 18-03-2010 |
| | | | CA | 2723097 A1 | 18-03-2010 |
| | | | CA | 2723150 A1 | 18-03-2010 |
| | | | CA | 2723152 A1 | 18-03-2010 |
| | | | CA | 2723154 A1 | 18-03-2010 |
| | | | CA | 2723158 A1 | 18-03-2010 |
| | | | EP | 2335125 A2 | 22-06-2011 |
| | | | KR | 20110069010 A | 22-06-2011 |
| | | | US | 2010070091 A1 | 18-03-2010 |
| | | | US | 2010070099 A1 | 18-03-2010 |
| | | | US | 2010070434 A1 | 18-03-2010 |
| | | | US | 2010089909 A1 | 15-04-2010 |
| | | | US | 2010090806 A1 | 15-04-2010 |
| | | | US | 2010092625 A1 | 15-04-2010 |
| | | | US | 2010094470 A1 | 15-04-2010 |
| | | | US | 2010101254 A1 | 29-04-2010 |
| | | | US | 2010121499 A1 | 13-05-2010 |
| | | | US | 2010146712 A1 | 17-06-2010 |
| | | | US | 2010174668 A1 | 08-07-2010 |
| | | | US | 2010175719 A1 | 15-07-2010 |
| | | | US | 2010179708 A1 | 15-07-2010 |
| | | | US | 2010187219 A1 | 29-07-2010 |
| | | | US | 2013103222 A1 | 25-04-2013 |

EPO FORM P0459

For more details about this annex : see Official Journal of the European Patent Office, No. 12/82

page 1 of 2

# EP 4 642 166 A1

## ANNEX TO THE EUROPEAN SEARCH REPORT
## ON EUROPEAN PATENT APPLICATION NO.

EP 24 17 1485

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | | Publication date |
|---|---|---|---|---|
| | | WO | 2010031012 A1 | 18-03-2010 |
| | | WO | 2010031013 A1 | 18-03-2010 |
| | | WO | 2010031014 A1 | 18-03-2010 |
| | | WO | 2010031015 A1 | 18-03-2010 |
| | | WO | 2010031017 A1 | 18-03-2010 |
| | | WO | 2010031018 A1 | 18-03-2010 |
| | | WO | 2010031019 A1 | 18-03-2010 |
| | | WO | 2010031024 A1 | 18-03-2010 |
| | | WO | 2010031025 A1 | 18-03-2010 |
| | | WO | 2010031027 A2 | 18-03-2010 |
| | | WO | 2010031028 A1 | 18-03-2010 |
| | | WO | 2010031029 A1 | 18-03-2010 |
| | | WO | 2010031030 A1 | 18-03-2010 |

EPO FORM P0459

For more details about this annex : see Official Journal of the European Patent Office, No. 12/82

page 2 of 2